# EUROPEAN PATENT APPLICATION

(11) **EP 4 692 597 A1**
(43) Date of publication of application: **11.02.2026**
(21) Application number: 24907312.3
(22) Date of filing: 12.12.2024
(51) Int. Cl.: F16H 55/06, B29C 33/42, F16H 55/17

(54) **COMPOSITE STRUCTURE ROTATING BODY AND RESIN MOLDED BODY**

(30) Priority: 19.12.2023 JP 2023214208
(71) Applicant: Resonac Corporation, Tokyo 105-7325 (JP)
(72) Inventor: TAHARA, Shinichi, Tokyo 105-7325 (JP)
(74) Representative: Berggren Oy
(86) International application number: PCT/JP2024/044094
(87) International publication number: WO 2025/134927

(57) **Abstract**

A composite structure gear includes a ring-shaped resin molded body containing reinforcing fiber and resin and having tooth profiles formed on an outer peripheral portion, a ring-shaped metal bush, and a bonding resin member that bonds the resin molded body and the metal bush. In the resin molded body, a plurality of recessed regions are formed at predetermined intervals in a circumferential direction, and a thin portion in which recessed portions are formed on both surfaces in a thickness direction of the resin molded body is provided the recessed region. In the recessed region, a total value of depths of the recessed portions on both surfaces is smaller than a thickness of the thin portion.

## Description

### Technical Field

One aspect of the present invention relates to a composite structure rotating body and a resin molded body.

### Background Art

Patent Literature 1 describes a resin composite structure rotating body in which a reinforcing fiber base material is impregnated with resin to form a tooth portion.

### Citation List

### Patent Literature

Patent Literature 1: Japanese Unexamined Patent Publication No. 2001-295913

### Summary of Invention

### Technical Problem

Here, in the resin composite structure rotating body described above, it may be difficult for the reinforcing fiber to follow a partial region in a resin molded body (a molded body containing reinforcing fiber and resin), for example, a protruding region (a region sandwiched between two recessed regions) in an adjacent irregularity shape at the time of molding.

One aspect of the present invention has been made in view of the above circumstances, and an object thereof is to provide a composite structure rotating body and a resin molded body in which reinforcing fiber is provided in a well-balanced manner to improve strength.

### Solution to Problem

A composite structure rotating body according to one aspect of the present invention includes a ring-shaped resin molded body containing reinforcing fiber and resin and having tooth profiles formed on an outer peripheral portion, a ring-shaped metal bush, and a bonding resin member that bonds the resin molded body and the metal bush, in which a plurality of recessed regions are formed in the resin molded body at predetermined intervals in a circumferential direction, a thin portion in which recessed portions are formed on both surfaces of the resin molded body in a thickness direction is provided in the recessed region, and in the recessed region, a total value of depths of the recessed portions on both the surfaces is smaller than a thickness of the thin portion.

In the composite structure rotating body according to one aspect of the present invention, the plurality of recessed regions are formed along the circumferential direction in the ring-shaped resin molded body, and the thin portion in which the recessed portions are formed on both surfaces in the thickness direction of the resin molded body is provided in each recessed region. Then, in each recessed region, the total value of the depths of the recessed portions on both surfaces is smaller than the thickness of the thin portion. The recessed portion is formed to be shallow in this manner, and thus, the reinforcing fiber can be provided so as to appropriately follow the region between the recessed regions adjacent to each other at the time of molding the resin molded body. That is, in a case where the recessed portion is formed to be deep, it is difficult for the reinforcing fiber to follow the region adjacent to the recessed region. Meanwhile, the recessed portion is formed to be shallow to such an extent that the total value of the depths of the recessed portions on both surfaces is smaller than the thickness of the thin portion, and thus, the reinforcing fiber can also be appropriately provided in the region adjacent to the recessed region. Accordingly, it is possible to provide the reinforcing fiber in a well-balanced manner even in, for example, the resin molded body in which continuous irregularity portions are formed. Note that, in a case where the recessed portion is formed to be shallow, there may be a problem that a bonding property between the resin molded body and the bonding resin member deteriorates. However, since the reinforcing fiber is also appropriately provided in the region adjacent to the recessed region as described above, strength can be secured by the reinforcing fiber, and a deterioration in the bonding property can be appropriately suppressed. As described above, according to one aspect of the present invention, it is possible to provide the composite structure rotating body in which the reinforcing fiber is provided in a well-balanced manner to improve strength.

A resin molded body according to one aspect of the present invention is a ring-shaped resin molded body constituting a composite structure rotating body by being bonded to a metal bush by a bonding resin member. The resin molded body includes reinforcing fiber, and resin, in which a plurality of recessed regions are formed at predetermined intervals in a circumferential direction, a thin portion in which recessed portions are formed on both surfaces in a thickness direction is provided in the recessed region, and in the recessed region, a total value of depths of the recessed portions on both the surfaces is smaller than a thickness of the thin portion. The resin molded body is formed in this manner, and thus, it is possible to provide the composite structure rotating body in which the reinforcing fiber is provided in a well-balanced manner to improve strength.

In the composite structure rotating body or the resin molded body according to one aspect of the present invention, the reinforcing fiber may be organic fiber. According to such a configuration, the strength of the composite structure rotating body or the resin molded body can be appropriately improved.

In the composite structure rotating body or the resin molded body according to one aspect of the present invention, the reinforcing fiber may be aramid fiber. According to such a configuration, the strength of the composite structure rotating body or the resin molded body can be appropriately improved.

In the composite structure rotating body or the resin molded body according to one aspect of the present invention, a length in the circumferential direction of a region sandwiched between two recessed regions adjacent to each other may be larger than a height of the region. According to such a configuration, it is possible to provide the reinforcing fiber appropriately following the region sandwiched between the two recessed regions at the time of molding the resin molded body.

In the composite structure rotating body or the resin molded body according to one aspect of the present invention, the length in the circumferential direction of the region sandwiched between the two recessed regions adjacent to each other may be twice or more of the height. According to such a configuration, it is possible to provide the reinforcing fiber appropriately following the region sandwiched between the two recessed regions at the time of molding the resin molded body.

In the composite structure rotating body or the resin molded body according to one aspect of the present invention, a length in a radial direction from an inner peripheral surface of an inner peripheral portion to an outer peripheral surface of an outer peripheral portion in the resin molded body may be 40% to 50% or 30% to 40% of a radius of the resin molded body. Since the resin molded body is required to have strength, an expensive resin is employed. In this regard, the amount of the resin molded body is adjusted to have a minimum necessary volume while ensuring appropriate strength, and thus, it is possible to reduce cost while satisfying a strength requirement level.

In the composite structure rotating body or the resin molded body according to one aspect of the present invention, R may be given to a corner portion of the recessed portion on an outer peripheral side. According to such a configuration, releasability from a mold can be improved.

In the composite structure rotating body or the resin molded body according to one aspect of the present invention, a total amount (volume) of the reinforcing fiber contained in the resin molded body may be 40% or more. According to such a configuration, appropriate strength can be imparted to the resin molded body.

### Advantageous Effects of Invention

According to one aspect of the present invention, it is possible to provide the composite structure rotating body and the resin molded body in which the reinforcing fiber is provided in a well-balanced manner to improve strength.

### Brief Description of Drawings

FIG. 1 is a front view and a sectional view of a composite structure gear according to an embodiment.
FIG. 2 is a front view and a sectional view of a resin molded body included in the composite structure gear of FIG. 1.
FIG. 3 is a diagram for explaining a molding method.
FIG. 4 is a diagram for explaining the molding method.
FIG. 5 is a diagram for explaining a state of reinforcing fiber at the time of clamping compression.
FIG. 6 is a sectional view of a composite structure gear according to a comparative example.
FIG. 7 is a sectional view of a resin molded body included in the composite structure gear of FIG. 6.
FIG. 8 is a diagram for explaining a state of the reinforcing fiber at the time of clamping compression in the resin molded body according to the comparative example.
FIG. 9 is a front view and a sectional view of a composite structure gear according to a modification.
FIG. 10 is a front view and a sectional view of a resin molded body included in the composite structure gear of FIG. 9.

### Description of Embodiments

Hereinafter, embodiments of the present invention will be described in detail with reference to the drawings. In the description of the drawings, the same or corresponding elements are denoted by the same reference signs, and redundant description will be omitted.

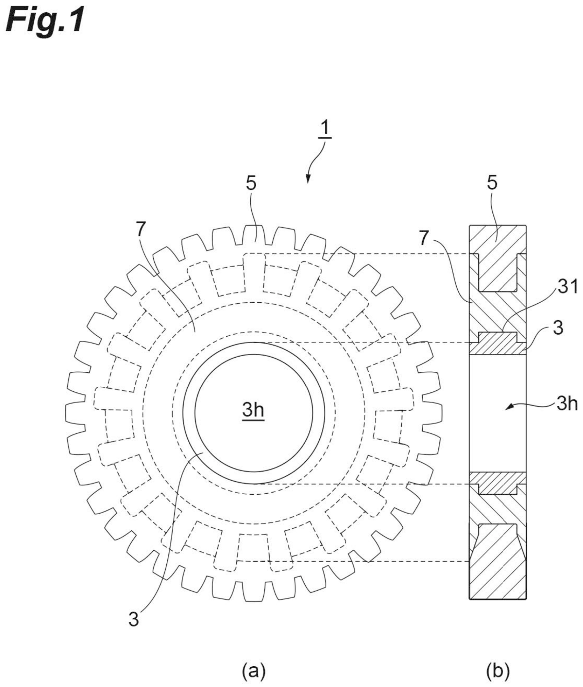

FIG. 1 is a front view (FIG. 1(a)) and a sectional view (FIG. 1(b)) of a composite structure gear according to an embodiment. As illustrated in FIGS. 1(a) and 1(b), a composite structure gear 1 is a so-called hybrid gear made of resin and metal, and is used as, for example, a gear for a vehicle, an industrial, or the like. The composite structure gear 1 may be a composite structure rotating body including a metal bush 3, a resin molded body 5, and a bonding resin member 7.

The metal bush 3 is, for example, a member attached to a rotation shaft (not illustrated). As illustrated in FIGS. 1(a) and 1(b), the metal bush 3 has a ring-shaped shape. The metal bush 3 is made of, for example, metal such as stainless steel. A through-hole 3h is provided in the metal bush 3. The through-hole 3h penetrates the metal bush 3 in an axial direction. A rotation shaft is inserted into the through-hole 3h. The metal bush 3 has a plurality of protruding whirl-stop portions 31 formed at predetermined intervals in a circumferential direction on an outer peripheral surface thereof. The whirl-stop portions 31 enter the bonding resin member 7. The whirl-stop portions 31 have a function of whirl-stopping and preventing the bonding resin member 7 from coming off with respect to the metal bush 3.

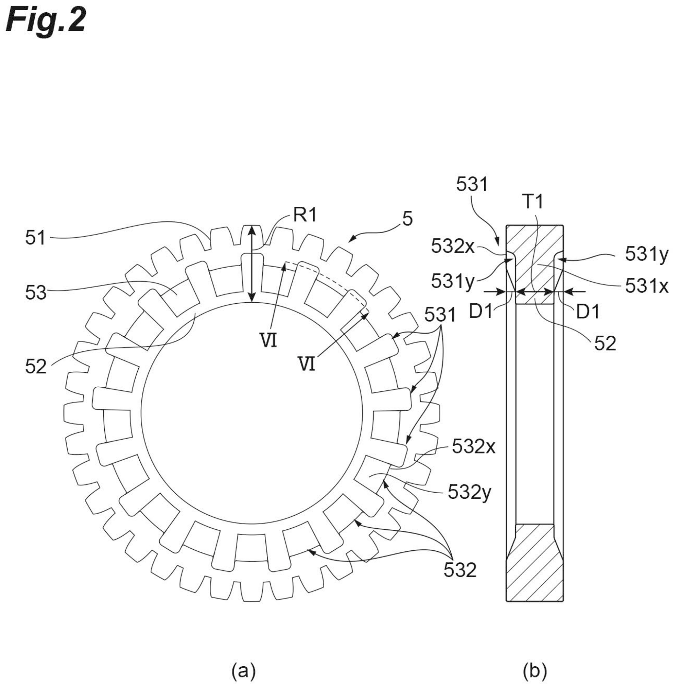

The resin molded body 5 is a member that meshes with another gear. FIG. 2 is a front view and a sectional view of the resin molded body 5 included in the composite structure gear 1 of FIG. 1. As illustrated in FIGS. 1(a) and 1(b) and FIGS. 2(a) and 2(b), the resin molded body 5 has a ring-shaped shape coaxial with the metal bush 3. The resin molded body 5 is provided around the metal bush 3 and around the bonding resin member 7. The resin molded body 5 includes an outer peripheral portion 51, an inner peripheral portion 52, and an intermediate portion 53.

The outer peripheral portion 51 is a ring-shaped portion provided on an outer periphery of the resin molded body 5. Tooth profiles are formed on the outer peripheral portion 51. A plurality of tooth profiles are formed at predetermined intervals in a circumferential direction of the resin molded body 5. The inner peripheral portion 52 is a ring-shaped portion provided on an inner periphery of the resin molded body 5.

The intermediate portion 53 is a portion between the outer peripheral portion 51 and the inner peripheral portion 52. As illustrated in FIG. 2(a), a plurality of recessed regions 531 are formed at predetermined intervals in a circumferential direction in the intermediate portion 53 of the resin molded body 5. Specifically, in the intermediate portion 53 of the resin molded body 5, the recessed regions 531 and regions 532 are alternately disposed in a circumferential direction. Such a region 532 is a region sandwiched between two recessed regions 531 adjacent to each other.

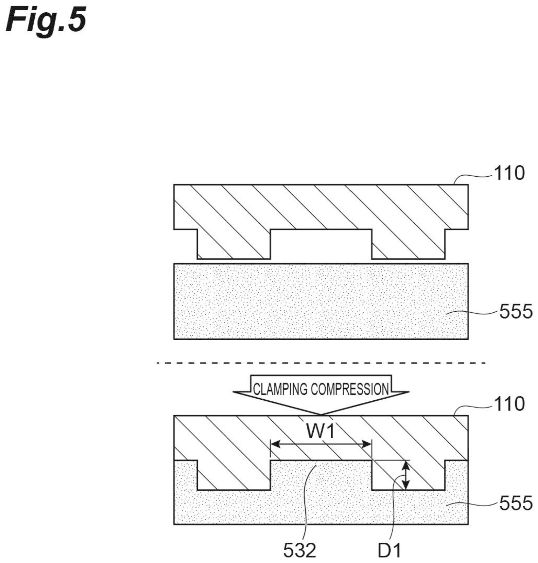

As illustrated in FIG. 2(b), a thin portion 531x in which recessed portions 531y and 531y are formed on both surfaces of the resin molded body 5 in a thickness direction is provided in each recessed region 531. In the recessed region 531, a total value of depths D1 and D1 of the recessed portions 531y and 531y on both surfaces is smaller than a thickness T1 of the thin portion 531x. In other words, in the region 532 between the recessed regions 531, a total value (that is, D1 + D1) of heights of inclined surface portions 532y and 532y (to be described later), which are protruding portions on both surfaces, is smaller than the thickness T1 of the thin portion 531x. Hereinafter, the depth D1 of the recessed portion 531y may be referred to as the height D1 of the region 532 (specifically, the inclined surface portion 532y). In addition, a width W1 (see FIG. 5), which is a length of the region 532 in a circumferential direction, is larger than the height D1 of the inclined surface portion 532y of the region 532, and is, for example, twice or more. The thickness T1 of the thin portion 531x may be, for example, about 5 to 10 mm. The height D1 of the inclined surface portion 532y of the region 532 (the depth D1 of the recessed portion 531y) may be, for example, about 2 to 5 mm. The width W1 (see FIG. 5) of the inclined surface portion 532y of the region 532 may be, for example, about 4 to 10 mm. In addition, a length R1 in a radial direction from an inner peripheral surface of the inner peripheral portion 52 to an outer peripheral surface of the outer peripheral portion 51 in the resin molded body 5 (see FIG. 2(a)) may be about 40% to 50% of a radius of the resin molded body 5, and specifically, may be about 15 to 20 mm.

In addition, as illustrated in FIG. 2(a), R may be given to a corner portion of the recessed portion 531 y on the outer peripheral side in order to improve releasability from a mold. That is, the corner portion of the recessed portion 531y on the outer peripheral side may have an R shape.

A base portion 532x and the inclined surface portion 532y are provided in each region 532. The base portion 532x is a portion provided at a position continuous to the outer peripheral portion 51. The inclined surface portion 532y is a portion that is continuous with the base portion 532x and extends obliquely such that a thickness decreases toward the inner peripheral portion 52 along a radial direction (see FIG. 2(b)). The inclined surface portions 532y are formed on both surfaces of the resin molded body 5 in the thickness direction.

The resin molded body 5 contains reinforcing fiber and resin. The reinforcing fiber contained in the resin molded body 5 is, for example, organic fiber. The reinforcing fiber may be, for example, aramid fiber, poly-p-phenylenebenzobisoxazole (PBO) fiber, carbon fiber, glass fiber, metal fiber, or the like. The resin contained in the resin molded body 5 may be, for example, a polyaminoamide resin, a phenol resin, an unsaturated polyester resin, or the like. Note that, the aramid fiber employed as the reinforcing fiber may be para-aramid fiber, meta-aramid fiber, or para-aramid fiber pulp. In a case where the para-aramid fibers are employed, a length thereof may be 3 mm or more. In a case where the meta-aramid fiber is employed, the length thereof may be 3 mm or more or 6 mm or more. A total amount (volume) of the reinforcing fiber contained in the resin molded body 5 may be 40% or more, or may be 40% or more and 60% or less.

The bonding resin member 7 is a member that bonds the resin molded body 5 and the metal bush 3. The bonding resin member 7 covers surfaces of the intermediate portion 53 and the inner peripheral portion 52 of the resin molded body 5 and is provided up to a position coming into contact with the outer peripheral surface of the metal bush 3, for example. The resin contained in the bonding resin member 7 may be, for example, polyphenylene sulfide (PPS), poly ether ether ketone (PEEK), polyimide (PI), liquid crystal polymer (LCP), polyamide (PA), polyoxymethylene (POM), polyphenylene ether (PPE), poly butylene terephtalate (PBT), or the like, and may be reinforced with glass fibers. Note that, the resin contained in the bonding resin member 7 may be less expensive than the resin contained in the resin molded body 5.

Next, a method for manufacturing the composite structure gear 1 will be described. The method for manufacturing the composite structure gear 1 includes a step of forming a fiber assembly, a step of forming a resin rotating body, a molding step, and a step of forming the resin molded body 5.

The step of forming the fiber assembly will be described. In this step, a fiber assembly surrounding the outer peripheral portion of the metal bush 3 is formed by accumulating short fibers in an annular mold by a paper-making method and performing a compression operation by using a paper-making compression device (not illustrated). The short fibers are supplied to a mold of a paper-making and compression device as a slurry formed by being mixed with water. Then, vacuum suction is performed to discharge moisture, and thus, an annular fiber assembly is formed.

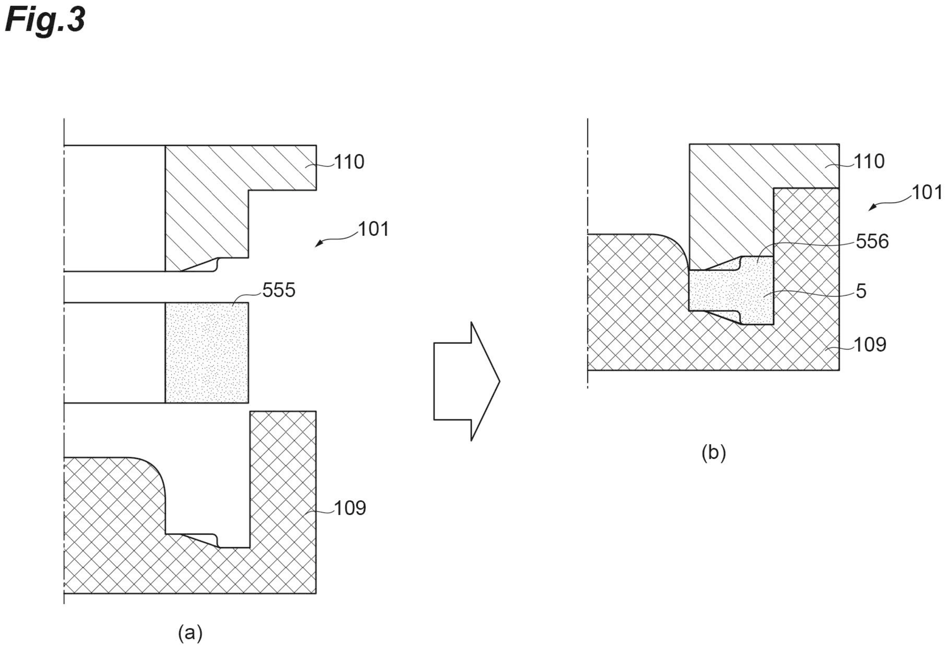

Next, a step of forming a resin rotating body 556 will be described. In this step, the resin rotating body 556 is formed by compressing the annular fiber assembly by clamping, impregnating resin, and curing the resin. As illustrated in FIG. 3(a), a fiber base material 555 is disposed in a mold 101. The mold 101 includes a lower mold 109 and an upper mold 110 that are paired in an upper-lower direction and sandwich the metal bush 3 and the like. As illustrated in FIG. 3(b), the resin rotating body 556 containing the reinforcing fiber and the resin is formed by performing clamping by the lower mold 109 and the upper mold 110 to forcibly compress the fiber base material 555 into a shape along irregularities of the lower mold 109 and the upper mold 110 and injecting a liquid resin into the mold 101 to cure the resin.

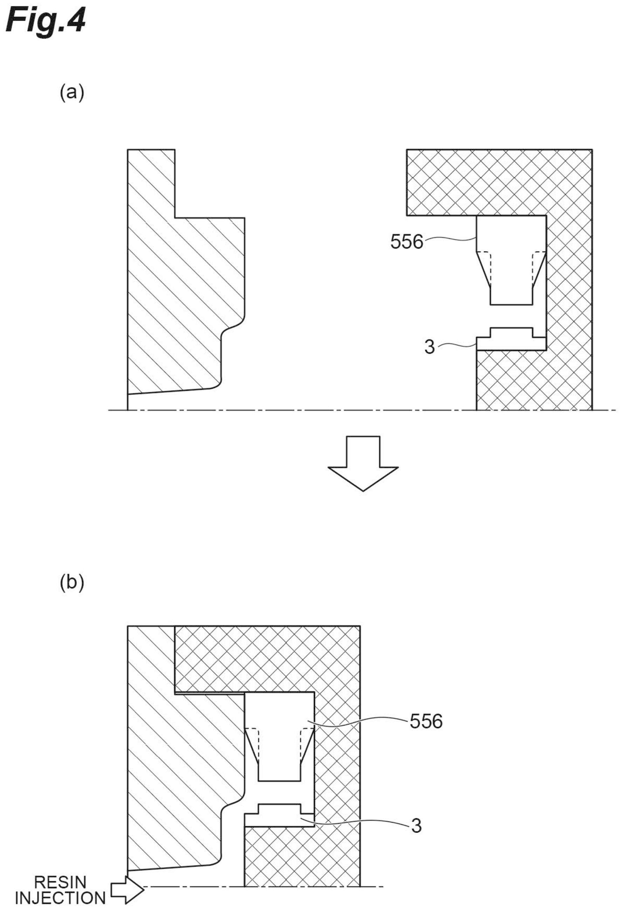

Next, the molding step will be described. In this step, a molded article is formed by bonding the resin rotating body 556 and the metal bush 3 by the bonding resin member 7. Specifically, as illustrated in FIG. 4(a), the resin rotating body 556 and the metal bush 3 are set in different molds, and as illustrated in FIG. 4(b), the molded article is formed by injecting and integrating the bonding resin member 7 after clamping.

Finally, the step of forming the resin molded body 5 will be described. In this step, the resin molded body 5 is formed by machining the outer peripheral portion of the resin rotating body 556 to form the tooth profiles. In this manner, the composite structure gear 1 in which the metal bush 3 and the resin molded body 5 are connected by the bonding resin member 7 is manufactured.

Next, functions and effects of the composite structure gear 1 (and the resin molded body 5) according to the present embodiment will be described.

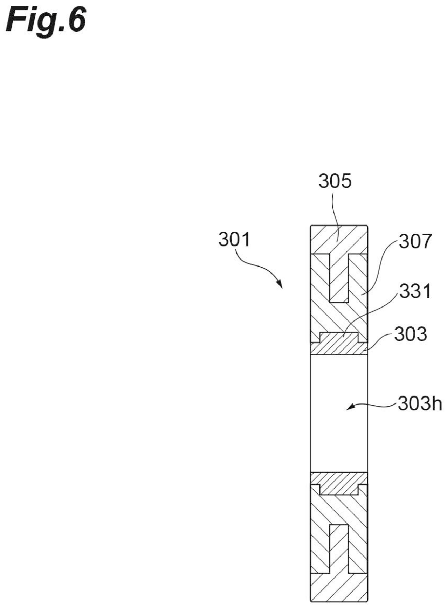

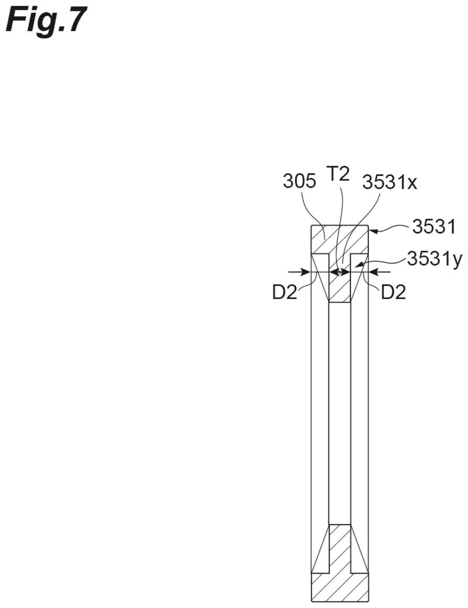

First, a composite structure gear 301 according to a comparative example will be described with reference to FIGS. 6 and 7. As illustrated in FIG. 6, a basic configuration of the composite structure gear 301 is similar to that of the composite structure gear 1 according to the present embodiment, and includes a resin molded body 305, a metal bush 303, and a bonding resin member 307. A through-hole 303h is provided in the metal bush 303. The metal bush 303 has a plurality of protruding whirl-stop portions 331 formed at predetermined intervals in a circumferential direction on an outer peripheral surface thereof. As illustrated in FIG. 7, a thin portion 3531x in which recessed portions 3531y and 3531y are formed on both surfaces of the resin molded body 305 in a thickness direction is provided in a recessed region 3531 of the resin molded body 305. In each recessed region 3531, a total value (D2 + D2) of depths D2 and D2 of the recessed portions 3531y and 3531y on both surfaces is larger than a thickness T2 of the thin portion 3531x. In the example illustrated in FIG. 7, the depth D2 of the recessed portion 3531y is about the same as the thickness T2 of the thin portion 3531x, and the total value (D2 + D2) of the depths D2 and D2 of the recessed portions 3531y and 3531y on both surfaces is about twice the thickness T2 of the thin portion 3531x.

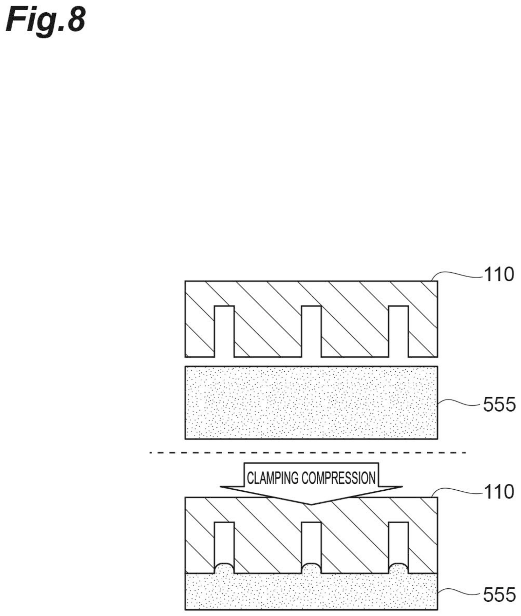

In such a resin molded body 305 in which the depth D2 of the recessed portion 3531y is deep, the reinforcing fiber cannot be appropriately brought into close contact with the region (for example, the protruding portion) adjacent to the recessed portion 3531y at the time of molding, and strength may be weakened. FIG. 8 is a diagram illustrating a state of the fiber base material 555 (reinforcing fiber) at the time of clamping compression with respect to the resin molded body 305. As illustrated in FIG. 8, in a case where the depth of the recessed portion 3531y after molding is increased, the fiber base material 555 (reinforcing fiber) does not appropriately follow the upper mold 110, and the reinforcing fiber cannot be appropriately provided in the region adjacent to the recessed portion 3531y.

On the other hand, the composite structure gear 1 according to the present embodiment includes the ring-shaped resin molded body 5 containing the reinforcing fiber and the resin and having the tooth profiles formed on the outer peripheral portion 51, the ring-shaped metal bush 3, and the bonding resin member 7 bonding the resin molded body 5 and the metal bush 3. In the resin molded body 5, the plurality of recessed regions 531 are formed at the predetermined intervals in the circumferential direction, and the region 532 is formed between the recessed regions 531 adjacent to each other. In the recessed region 531, the thin portion 531x in which the recessed portions 531y are formed on both surfaces of the resin molded body 5 in the thickness direction is provided. Then, as illustrated in FIG. 2(b), in the recessed region 531, the total value of the depths D1 of the recessed portions 531y on both surfaces is smaller than the thickness T1 of the thin portion 531x.

In such a composite structure gear 1, the plurality of recessed regions 531 are formed along the circumferential direction in the ring-shaped resin molded body 5, and in each recessed region 531, the thin portion 531x in which the recessed portions 531y and 531y are formed on both surfaces of the resin molded body 5 in the thickness direction is provided. Then, in each recessed region 531, the total value of the depths D1 and D1 of the recessed portions 531y and 531y on both surfaces is smaller than the thickness T1 of the thin portion 531x. The recessed portions are formed to be shallow in this manner, and thus, it is possible to provide the reinforcing fiber appropriately following the region 532 between the recessed regions 531 adjacent to each other at the time of molding the resin molded body 5. That is, in a case where the recessed portion 3531y is formed to be deep as in the configuration according to the comparative example, it is difficult to cause the reinforcing fiber to follow the region 532 between the recessed regions 531. However, the recessed portion 531y is formed to be shallow to such an extent that the total value of the depths of the recessed portions 531y and 531y on both surfaces becomes smaller than the thickness of the thin portion 531x, and thus, the reinforcing fiber can also be appropriately provided in the region 532 adjacent to the recessed region 531. Accordingly, it is possible to provide the reinforcing fiber in a well-balanced manner even in the resin molded body 5 in which continuous irregularity portions are formed. Note that, in a case where the recessed portion is formed to be shallow, there may be a problem that bonding property between the resin molded body 5 and the bonding resin member 7 deteriorates. However, since the reinforcing fiber is also appropriately provided in the region 532 as described above, the strength can be secured by the reinforcing fiber, and the deterioration in the bonding property can be appropriately suppressed. As described above, according to the configuration of the present embodiment, it is possible to provide the composite structure gear 1 in which the reinforcing fiber is provided in a well-balanced manner to improve strength.

The reinforcing fiber may be organic fiber or aramid fiber. According to such a configuration, the strength of the composite structure gear 1 can be appropriately secured.

As illustrated in FIG. 5, the width W1 of the region 532, which is the length in the circumferential direction may be larger than the height D1, for example, twice or more. The width is wide and the depth is shallow in this manner, and thus, the reinforcing fiber can appropriately follow the region 532 at the time of clamping compression.

The length R1 in the radial direction from the inner peripheral surface of the inner peripheral portion 52 to the outer peripheral surface of the outer peripheral portion 51 in the resin molded body 5 may be 40% to 50% or 30% to 40% of the radius of the resin molded body 5. As a result, it is possible to secure an appropriate strength while adjusting the amount of the resin molded body 5, and at the same time, it is possible to suppress an increase in cost.

The corner portion of the recessed portion 531y on the outer peripheral side may be provided with R (may have an R shape). According to such a configuration, releasability from a mold can be improved.

The total amount (volume) of the reinforcing fiber contained in the resin molded body 5 may be 40% or more. According to such a configuration, appropriate strength can be imparted to the resin molded body 5.

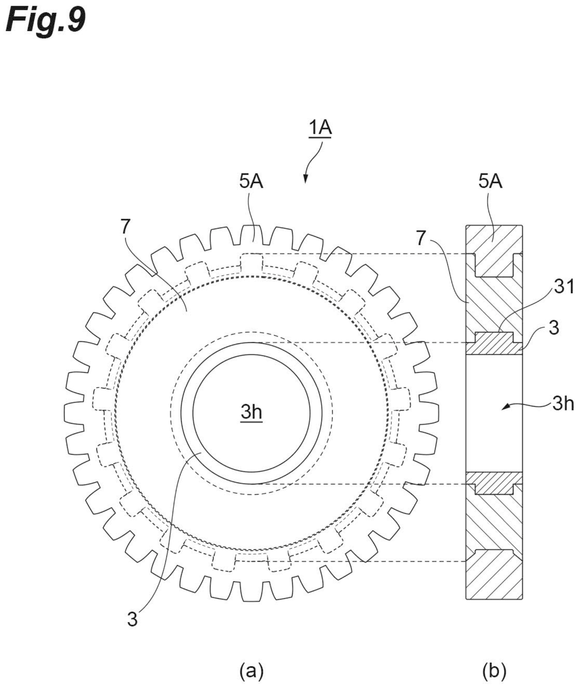

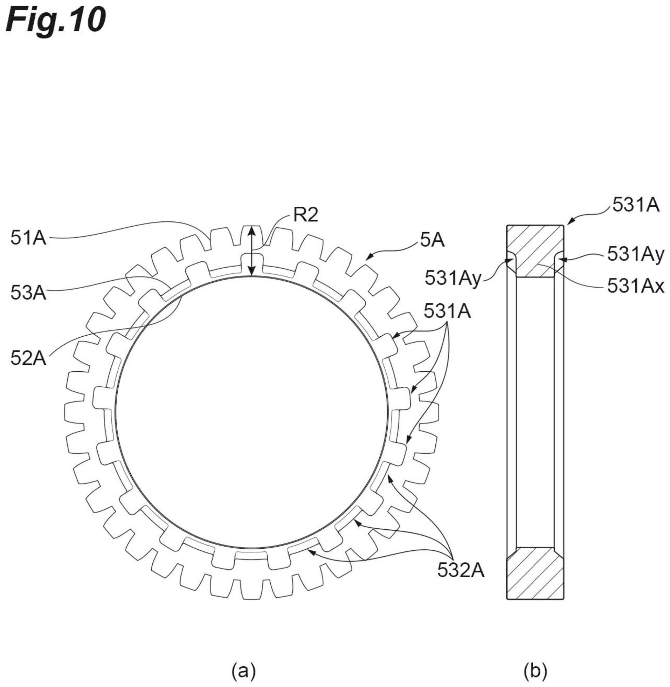

Although one embodiment of the present invention has been described above, the present invention is not limited to the above description. For example, a composite structure gear 1A illustrated in FIGS. 9 and 10 may be employed as the composite structure gear. As illustrated in FIG. 9, a basic configuration of the composite structure gear 1A is similar to that of the composite structure gear 1 according to the above-described embodiment, and includes a resin molded body 5A, a metal bush 3, and a bonding resin member 7. Here, the resin molded body 5A of the composite structure gear 1A which is different in configuration from the composite structure gear 1 will be described in detail.

FIG. 10 is a front view (FIG. 10(a)) and a sectional view (FIG. 10(b)) of the resin molded body 5A included in the composite structure gear 1A of FIG. 9. As illustrated in FIG. 10, a plurality of recessed regions 531A are formed at predetermined intervals in a circumferential direction in a center portion 53A of the resin molded body 5A, and a thin portion 531Ax in which recessed portions 531Ay and 531Ay are formed on both surfaces of the resin molded body 5A in a thickness direction is provided in the recessed region 531A. Then, as illustrated in FIG. 10(b), in the recessed region 531A, a total value of depths of the recessed portions 531Ay and 531Ay on both surfaces is smaller than a thickness of the thin portion 531Ax.

Then, as is apparent from comparison between FIGS. 10(a) and 2(a), a length R2 in the radial direction from the inner peripheral surface of the inner peripheral portion 52A to the outer peripheral surface of the outer peripheral portion 51A in the resin molded body 5A (see FIG. 10(a)) is smaller than the length R1 in the radial direction from the inner peripheral surface of the inner peripheral portion 52 to the outer peripheral surface of the outer peripheral portion 51 in the resin molded body 5 (see FIG. 2(a)). Specifically, the length R2 in the radial direction from the inner peripheral surface of the inner peripheral portion 52A to the outer peripheral surface of the outer peripheral portion 51A in the resin molded body 5A may be about 30% to 40% of the radius of the resin molded body 5A, and a value thereof may be about 10 to 15 mm.

The length R2 of the resin molded body 5A in the radial direction is decreased in this manner, and thus, the volume of the expensive resin molded body 5A can be reduced as compared with the bonding resin member 7. As a result, the material cost can be reduced.

### Reference Signs List

1, 1A Composite structure gear
3 Metal bush
5, 5A Resin molded body
7 Bonding resin member
531, 531A Recessed region
531x, 531Ax Thin portion
531y, 531Ay Recessed portion
D1 Depth of recessed portion (height of region between recessed regions)
W1 Width (length in circumferential direction)

## Claims

1. A composite structure rotating body comprising:
a ring-shaped resin molded body containing reinforcing fiber and resin and having tooth profiles formed on an outer peripheral portion;
a ring-shaped metal bush; and
a bonding resin member that bonds the resin molded body and the metal bush,
wherein a plurality of recessed regions are formed in the resin molded body at predetermined intervals in a circumferential direction,
a thin portion in which recessed portions are formed on both surfaces of the resin molded body in a thickness direction is provided in the recessed region, and
in the recessed region, a total value of depths of the recessed portions on both the surfaces is smaller than a thickness of the thin portion.

2. The composite structure rotating body according to claim 1, wherein the reinforcing fiber is organic fiber.

3. The composite structure rotating body according to claim 1, wherein the reinforcing fiber is aramid fiber.

4. The composite structure rotating body according to any one of claims 1 to 3, wherein a length in the circumferential direction of a region sandwiched between two recessed regions adjacent to each other is larger than a height.

5. The composite structure rotating body according to claim 4, wherein the length in the circumferential direction of the region sandwiched between the two recessed regions adjacent to each other is twice or more the height.

6. The composite structure rotating body according to any one of claims 1 to 5, wherein a length in a radial direction from an inner peripheral surface of an inner peripheral portion to an outer peripheral surface of an outer peripheral portion in the resin molded body is 40% to 50% or 30% to 40% of a radius of the resin molded body.

7. The composite structure rotating body according to any one of claims 1 to 6, wherein R is given to a corner portion of the recessed portion on an outer peripheral side.

8. The composite structure rotating body according to any one of claims 1 to 7, wherein a total amount (volume) of the reinforcing fiber contained in the resin molded body is 40% or more.

9. A ring-shaped resin molded body constituting a composite structure rotating body by being bonded to a metal bush by a bonding resin member, the resin molded body comprising:
reinforcing fiber; and
resin,
wherein a plurality of recessed regions are formed at predetermined intervals in a circumferential direction,
a thin portion in which recessed portions are formed on both surfaces in a thickness direction is provided in the recessed region, and
in the recessed region, a total value of depths of the recessed portions on both the surfaces is smaller than a thickness of the thin portion.
